# EUROPEAN PATENT SPECIFICATION

(11) **EP 3 297 399 B1**
(45) Date of publication and mention of the grant of the patent: **17.03.2021**
(21) Application number: 16792378.8
(22) Date of filing: 11.05.2016
(51) Int. Cl.: H05B 6/12, H05B 6/06

(54) **INDUCTION HEATING COOKING DEVICE**
KOCHVORRICHTUNG MIT INDUKTIONSERHITZUNG
DISPOSITIF DE CUISSON À CHAUFFAGE PAR INDUCTION

(30) Priority: 13.05.2015 JP 2015097802
(43) Date of publication of application: 21.03.2018
(73) Proprietor: Panasonic Intellectual Property Management Co., Ltd., Osaka-shi, Osaka 540-6207 (JP)
(72) Inventor: YOSHIKAWA, Kentaro, Osaka-shi, Osaka 540-6207 (JP); ISAGO, Hiroshi, Osaka-shi, Osaka 540-6207 (JP); WATANABE, Noriaki, Osaka-shi, Osaka 540-6207 (JP); TAKENAKA, Kazuhiko, Osaka-shi, Osaka 540-6207 (JP)
(74) Representative: SSM Sandmair
(86) International application number: PCT/JP2016/002303
(87) International publication number: WO 2016/181649

(56) References cited:
- EP-A2- 2 670 211
- WO-A1-2013/118027
- WO-A1-2014/064922
- JP-A- 2011 009 079
- JP-A- 2013 054 951
- JP-A- 2013 069 670
- US-A1- 2011 100 980

## Description

### TECHNICAL FIELD

The present invention relates to induction heating cookers.

### BACKGROUND ART

Conventionally, among induction heating cookers including a plurality of heating coils placed closely to each other under a top plate and are capable of heating a to-be-heated object such as a single cooking pan with the plurality of the heating coils, there have been induction heating cookers having heating coils constituted by a center coil and a plurality of peripheral coils, which are placed with respect to a heating port (refer to Patent Document 1, for example).

Further, there have been suggested induction heating cookers including a plurality of heating coils with the same shape which are placed with respect to a heating port (refer to Patent Document 2, for example).

Generally, induction heating cookers include sensors for temperature detection and are configured to perform control, in order to prevent the to-be-heated object from having abnormally-high temperatures and coming into unsafe states, while users take their eyes off the to-be-heated object.

For example, in PTL 1, a temperature sensor is placed in a center coil placed at a center of a heating port, and a single temperature sensor is placed between the center coil and each of peripheral coils, in order to detect a temperature of a to-be-heated object placed near the center of the heating port and centers of the heating coils.

In PTL 2, a single temperature sensor is placed at a center of each coil, or a single temperature sensor is placed at a center potion surrounded by four coils arranged in two rows by two rows, in order to detect a temperature of a to-be-heated object.

However, with conventional structures as described above, for example, the cooking heater described in PTL 1 preliminarily determines a position at which a to-be-heated object should be placed and, thus, this cooking heater is adapted on the premise that the to-be-heated object should be placed near the center of the heating port. Namely, this cooking heater is adapted on the premise that the to-be-heated object exists just above the center coil and, thus, is not adapted in the expectation that the to-be-heated object should be heated with only the peripheral coils.

Further, PTL 2 describes the temperature detection sensors placed evenly with respect to the heating port. However, conventional heating cookers of this type still have room for improvement, in view of detecting the highest temperature of the to-be-heated object and performing control before the occurrence of unsafety, regardless of the position at which the to-be-heated object is placed.

### Citation List

### Patent Literature

PTL 1: Unexamined Japanese Patent Publication No. 2013-038012
PTL 2: International Publication No. WO 2014/064922

EP 2 670 211 A2 discloses a hob device comprising heating elements (cf. Fig. 3). This document further discloses that a sensor element is provided at each of sub-areas between the two heating elements and that further sensor elements are arranged in centers of curvature of the heating elements (cf. paragraphs [0027] and [0028]).

### SUMMARY OF THE INVENTION

The present invention was made in view of conventional problems as described above and aims at providing an induction heating cooker which allows a user to determine the position at which an object to be heated is heated and is capable of detecting a temperature closer to the highest temperature of the object to be heated, regardless of the position at which the object to be heated is placed.

The present invention provides an induction heating cooker according to claim 1. Further embodiments of the present invention are described in the dependent claims.

More specifically, as an example of an exemplary embodiment of the present invention, there is provided an induction heating cooker including: a top plate which is placed on an upper surface of a main body and on which an object to be heated is placed; a heating port configured to indicate an area where the object to be heated is placed; and a heating coil portion which has a plurality of heating coils and is placed under the top plate in such a way as to correspond to the heating port. The induction heating cooker further includes a controller which is configured to change over a number of heating coils to be operated among the plurality of heating coils, according to a size of the object to be heated and a position at which the object to be heated is placed, and is configured to control a high-frequency electric current supplied to the heating coil portion to be operated. In the induction heating cooker, at least two heating coils are arranged to be placed side by side in the heating coil portion. In the induction heating cooker, the heating coil portion is provided with a first temperature sensor which is provided near a center of each of the plurality of heating coils, and a second temperature sensor which is provided between the heating coils adjacent to each other and near a portion where the heating coils adjacent to each other come closest to each other. The controller is configured to detect a temperature of the object to be heated with the first temperature sensors and the second temperature sensor and to control heating of the plurality of heating coils.

With such structure, it is possible to accurately detect the temperature at the portion in which magnetic forces are concentrated to cause the object to be heated to have a higher temperature, which can improve the safety and the cooking performance of the induction heating cooker.

In the induction heating cooker as an example of the exemplary embodiment of the present invention, the first temperature sensors and the second temperature sensor can be constituted by contact-type temperature sensors configured to come in contact with the top plate. With such structure, it is possible to accurately detect the temperature at the portion in which magnetic forces are concentrated to generate a higher temperature, which can improve the safety and the cooking performance.

In the induction heating cooker as an example of the exemplary embodiment of the present invention, the first temperature sensors can be constituted by contact-type temperature sensors configured to come in contact with the top plate, and the second temperature sensor can be constituted by an infrared sensor configured to detect an infrared ray radiated from the object to be heated. With such structure, it is possible to provide the advantage of being capable of detecting the temperature immediately and accurately with the infrared sensor as the second sensor and, further, the advantage of being capable of detecting the temperature even when the object to be heated does not exist just above the contact-type temperature sensors as the first temperature sensors, which can further improve the safety of the induction heating cooker.

In the induction heating cooker as an example of the exemplary embodiment of the present invention, at least one first temperature sensor, out of the first temperature sensors, can be placed in such a way as to be displaced from the center of the heating coil to which this first temperature sensor belongs. With such structure, even when a pan as the object to be heated is placed in such a way as to be displaced from the center in the leftward and rightward direction of the heating port which is the heating area, one first temperature sensor placed at the center of the heating coil or another first temperature sensor placed in such a way as to be displaced from the center of the heating coil are placed near the object to be heated, which enables accurately detecting the temperature.

In the induction heating cooker as an example of the exemplary embodiment of the present invention, at least one first temperature sensor, out of the first temperature sensors, can be placed in such a way as to be displaced from a center line of the heating port in a leftward and rightward direction or in a forward and rearward direction. With such structure, even when a pan as the object to be heated is placed in such a way as to be displaced from the center in the leftward and rightward direction or in the forward and rearward direction of the heating port which is the heating area, one first temperature sensor placed in such a way as to be displaced from the center line of the heating coils or another first temperature sensor placed on the center line of the heating coils is placed near the object to be heated, which enables accurately detecting the temperature.

### BRIEF DESCRIPTION OF DRAWINGS

FIG. 1 is an exploded perspective view of an induction heating cooker according to a first exemplary embodiment of the present invention.
FIG. 2 is a plan view illustrating, from above, heating coils in the induction heating cooker according to the first exemplary embodiment of the present invention.
FIG. 3 is a view illustrating an example of heating with a single heating coil in the induction heating cooker according to the first exemplary embodiment of the present invention.
FIG. 4 is a view illustrating an example of heating with two or more heating coils in the induction heating cooker according to the first exemplary embodiment of the present invention.
FIG. 5 is a plan view illustrating, from above, heating coils in an induction heating cooker according to a second exemplary embodiment of the present invention.
FIG. 6 is a plan view illustrating, from above, heating coils in an induction heating cooker according to a third exemplary embodiment of the present invention.
FIG. 7 is a plan view illustrating, from above, heating coils in an induction heating cooker according to a fourth exemplary embodiment of the present invention.
FIG. 8 is a plan view illustrating, from above, heating coils in an induction heating cooker according to a fifth exemplary embodiment of the present invention.

### DESCRIPTION OF EMBODIMENTS

Hereinafter, exemplary embodiments of the present invention will be described, with reference to the drawings. Further, the present invention is not intended to be restricted by the exemplary embodiments which will be described later.

### (First Exemplary Embodiment)

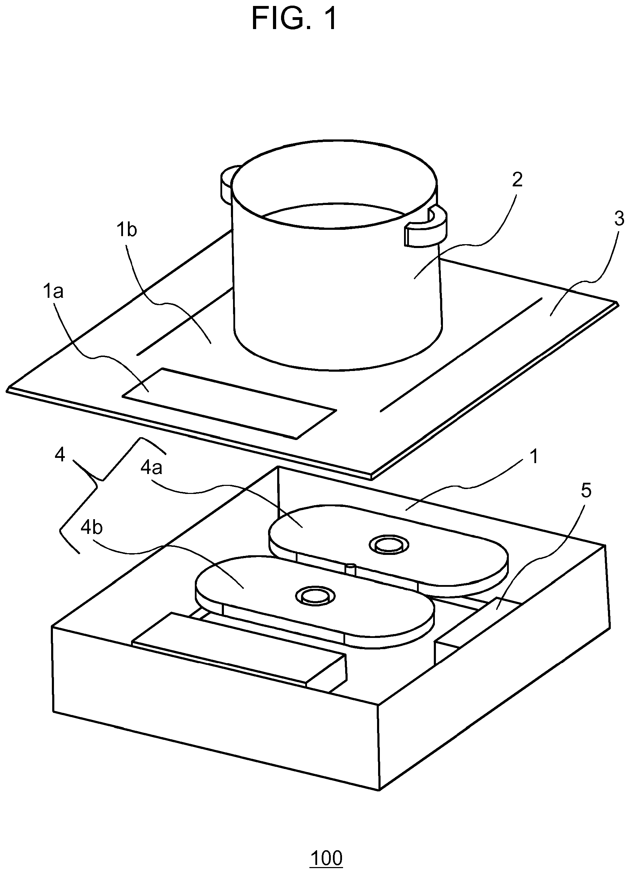

FIG. 1 is an exploded perspective view of induction heating cooker 100 according to a first exemplary embodiment of the present invention.

As illustrated in FIG. 1, pan 2 as an example of a to-be-heated object is placed, on an upper surface of main body 1 in induction heating cooker 100 according to the present exemplary embodiment. In induction heating cooker 100, the heating power is manipulated through manipulation area 1a placed in a front side of main body 1, thereby heating pan 2 for performing cooking.

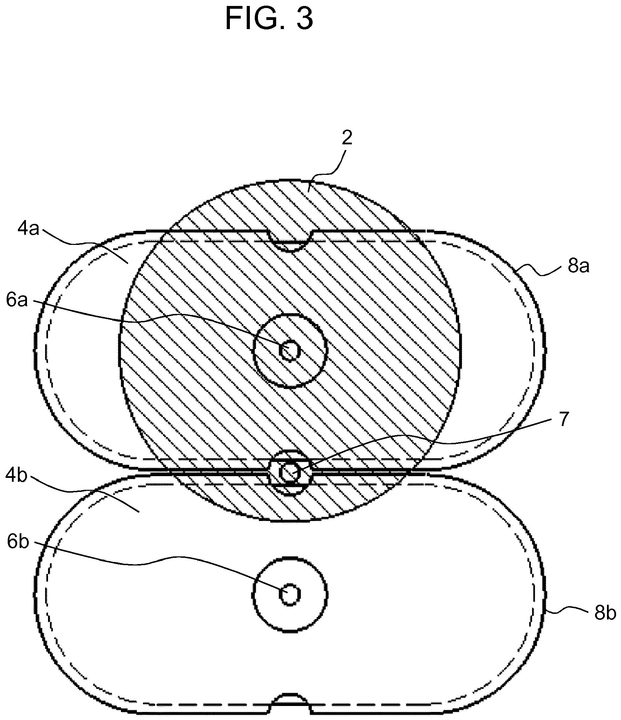

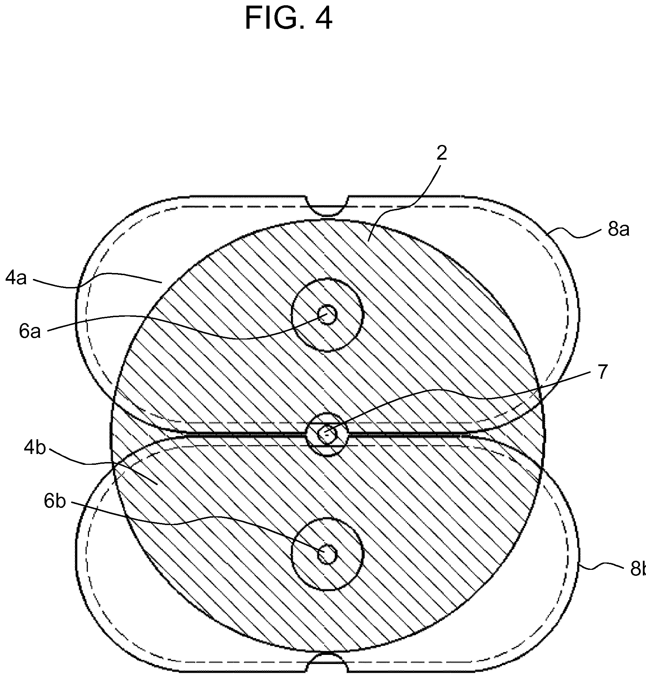

As illustrated in FIG. 1, main body 1 in induction heating cooker 100 is constituted by a unit including top plate 3, heating coil portion 4 and controller 5. Top plate 3 is formed from a tempered glass with heat resistance, and there is printed, on its surface, heating port 1b which notifies users of an area capable of heating pan 2. Under heating port 1b, there are provided heating coils 4a, 4b which constitute heating coil portion 4. Further, thereunder, there is provided controller 5 for controlling high-frequency electric currents which are supplied to heating coils 4a, 4b. Controller 5 is capable of changing over a number of the heating coils to be operated, depending on a size, a position and the like of pan 2 as an example of the to-be-heated object. For example, when a single heating coil 4a is generally encompassed by pan 2, as illustrated in FIG. 3, it is possible to heat it with only heating coil 4a. When pan 2 as an example of the to-be-heated object is placed in such a way as to straddle two heating coils 4a, 4b, as illustrated in FIG. 4, both heating coils 4a, 4b are used for heating.

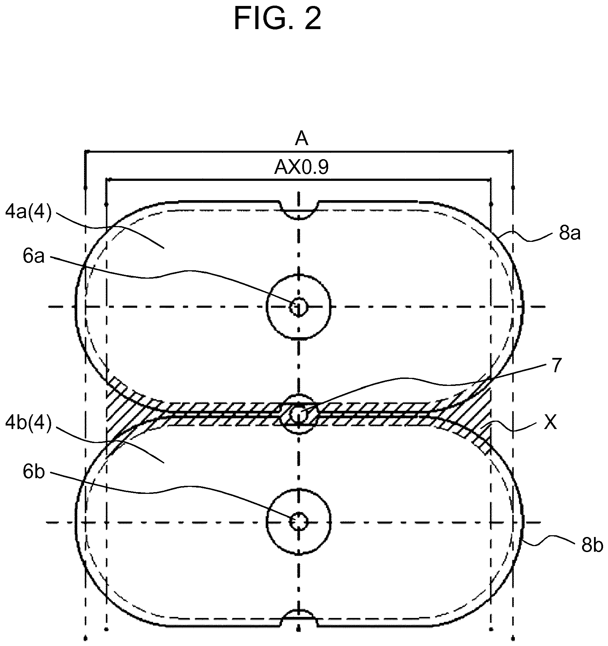

FIG. 2 is a view illustrating, from above, the heating coils in induction heating cooker 100 according to the exemplary embodiment of the present invention.

As illustrated in FIG. 2, first temperature sensors 6a, 6b are provided in heating coils 4a, 4b, respectively, near their centers. Heating coil 4a and heating coil 4b are arranged in substantially the same plane. In the present exemplary embodiment, heating coil 4a and heating coil 4b are constituted by copper wires coated with polyethylene and the like over their surfaces, wherein these copper wires are twisted and wound in an elliptical shape. In the present exemplary embodiment, the heating coils are illustrated as being arranged in substantially the same plane. However, for the sake of heating the same top plate, it is also possible to provide the same effects as those provided by heating coils arranged in the same plane, even if heating coils adjacent to each other are slightly deviated from each other at their center lines in the thickwise direction of the heating coils, such as in cases where coils having different thicknesses and the like are arranged, for example. Further, in the present exemplary embodiment, heating coils 4a, 4b are constituted by coated copper wires, but they can be also constituted by wires formed from plural layers made of copper, aluminum and the like, and these wires are not be limited to the wire materials illustrated in the present exemplary embodiment.

Further, although, in the present exemplary embodiment, there is illustrated an example where two heating coils 4a, 4b having an elliptical shape are installed in such a way as to be arranged, the shapes of the heating coils can be also circular shapes, polygonal shapes, rectangular shapes or triangular shapes, and are not limited provided that they can be arranged in a row. Further, the number of the heating coils is not limited to two, and three or more heating coils can be also arranged.

As illustrated in FIG. 2, between heating coil 4a and heating coil 4b, there is provided second temperature sensor 7, in the vicinity of the portion where heating coil 4a and heating coil 4b come closest to each other. In the present exemplary embodiment, second temperature sensor 7 is placed on a center line passing through the respective centers of the heating coils, as illustrated in FIGS. 1 to 4, but it is not necessarily necessary that second temperature sensor 7 exists on the center line. Further, the vicinity of the portion where the heating coils come closest to each other preferably falls within the range corresponding to 90% of longer diameters of the respective elliptical shapes of the heating coils adjacent to each other from their centers and more preferably falls within the range corresponding to 80% of these longer diameters, as represented as a range X in FIG. 2, in cases where two or more heating coils having an elliptical shape are arranged in the direction of their shorter diameters, for example. Further, in cases of heating coils having a circular shape or a rectangular shape, similarly, the vicinity of the portion where the heating coils come closest to each other preferably falls within the range corresponding to 90% of heating-coil widths in the direction normal to the direction of the arrangement of the heating coils from the centers of the heating coils and more preferably falls within the range corresponding to 80% thereof.

Between heating coils 4a, 4b and top plate 3, there are provided mica sheets 8a, 8b for establishing heat insulation from top plate 3 and electric insulation between heating coils 4a, 4b. Mica sheets 8a, 8b are provided with respective holes in such a way as to avoid first temperature sensors 6a, 6b and, further, are provided with respective cutouts in such a way as to avoid second temperature sensor 7 (see FIG. 2, for example).

Hereinafter, there will be described induction heating cooker 100 having the aforementioned structure, regarding operations and effects thereof.

At first, there will be described a case where pan 2 is placed above heating coil 4a, and heating coil 4a is operated solely, as illustrated in FIG. 3. When heating coil 4a is used solely, a bottom surface of pan 2 is made to have a higher temperature at its center, since its center is not influenced by heat dissipation to the periphery. Therefore, the temperature of the pan bottom of pan 2 being heated is detected mainly by first temperature sensor 6a and, before the occurrence of abnormal heating, the temperature can be detected by first temperature sensor 6a, and the heating output can be lowered or the running can be stopped.

Further, when pan 2 is placed to straddle heating coils 4a, 4b, and both heating coils 4a, 4b are used for heating, as illustrated in FIG. 4, magnetic fluxes are concentrated in the range X illustrated in FIG. 2, in cases where the electric currents in the directions of the windings of the heating coils adjacent to each other are the same and, further, in the portions of the heating coils which are faced to each other, the electric currents flow in such a way as to face each other, in the respective opposite directions, through the heating coils adjacent to each other. Further, even when the electric currents in the directions of the windings of the heating coils adjacent to each other are opposite to each other, it is possible to detect abnormal heating more immediately, since second temperature sensor 7 is placed near the portion which is raised most largely in temperature, which is the portion being covered by pan 2 as an example of the to-be-heated object and being less influenced by heat dissipation to the periphery.

### (Second Exemplary Embodiment)

There will be described induction heating cooker 200 according to a second exemplary embodiment of the present invention, with respect to an example of other structures of the first temperature sensors and the second temperature sensor. Further, the same components as those of the aforementioned first exemplary embodiment of the present invention will be designated by the same reference characters and will not be described.

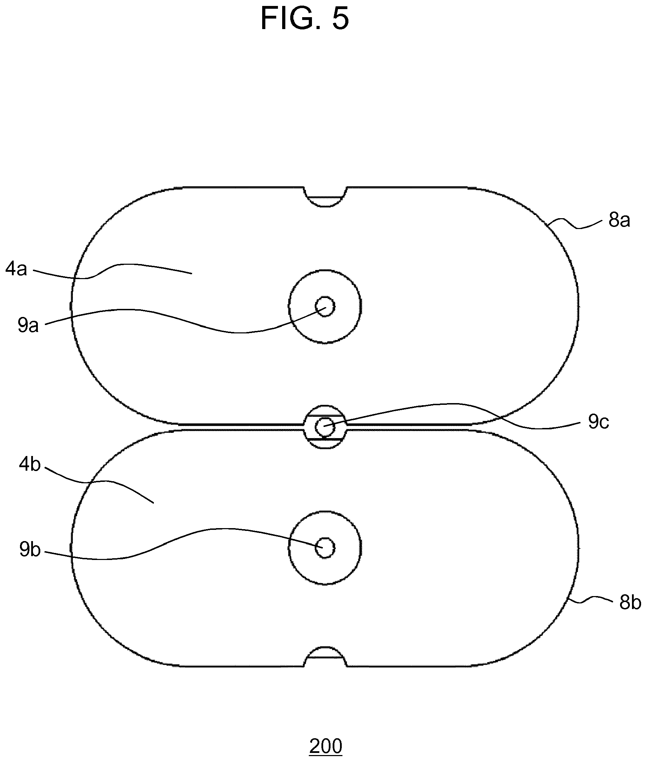

FIG. 5 is a view illustrating, from above, heating coils in induction heating cooker 200 according to the second exemplary embodiment of the present invention. The present exemplary embodiment is different from the first exemplary embodiment, in that the first temperature sensors and the second temperature sensor are constituted by contact-type temperature sensors 9a, 9b, 9c configured to come in contact with top plate 3, such as thermistors.

Hereinafter, there will be described induction heating cooker 200 having the aforementioned structure according to the present exemplary embodiment, regarding operations and effects thereof.

If pan 2 as an example of the to-be-heated object is heated, heat from pan 2 moves to top plate 3 due to heat conduction, thereby raising the temperature of top plate 3. Contact-type temperature sensors 9a, 9b, 9c, which are used as the first temperature sensors and the second temperature sensor, detect the temperature rise in top plate 3, thereby providing the same effects as the effects described in the first exemplary embodiment.

### (Third Exemplary Embodiment)

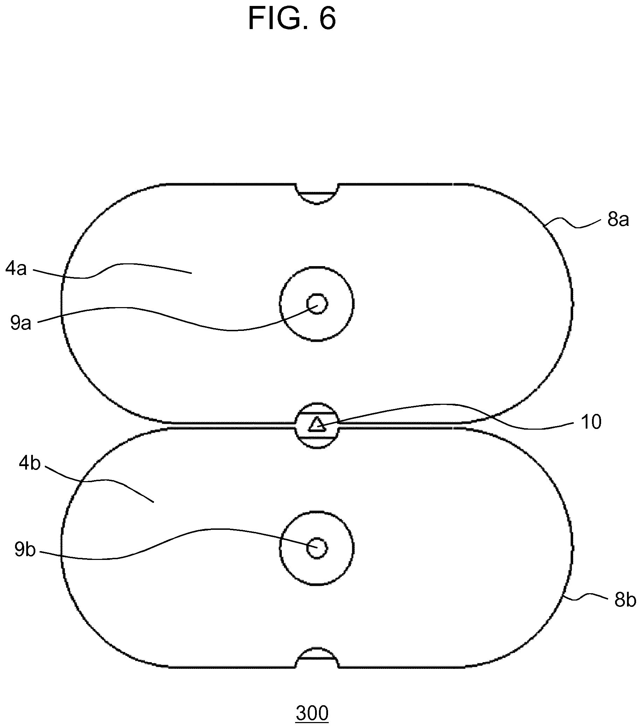

Hereinafter, there will be described induction heating cooker 300 according to a third exemplary embodiment of the present invention, with reference to FIG. 6. Further, the same components as those of the aforementioned first and second exemplary embodiments of the present invention will be designated by the same reference characters and will not be described.

FIG. 6 is a view illustrating, from above, heating coils in induction heating cooker 300 according to the third exemplary embodiment of the present invention. The present exemplary embodiment is different from the first and second exemplary embodiments, in that the first temperature sensors are constituted by contact-type temperature sensors 9a, 9b configured to come in contact with top plate 3, and the second temperature sensor is constituted by infrared sensor 10 for detecting infrared rays radiated from pan 2 as an example of a to-be-heated object.

Hereinafter, there will be described induction heating cooker 300 having the aforementioned structure according to the present exemplary embodiment, regarding operations and effects thereof.

Since the first temperature sensors are constituted by contact-type temperature sensors 9a, 9b, and the second temperature sensor is constituted by infrared sensor 10, it is possible to immediately and accurately detect the temperature at the range X (see FIG. 2) during concurrent heating using two or more heating coils, in which magnetic forces are concentrated most largely, and the to-be-heated object is raised largely in temperature.

Further, since the first sensors are constituted by contact-type temperature sensors 9a, 9b, even when pan 2 is placed at a position outside the range of light reception by infrared sensor 10, such as when pan 2 is placed at a position displaced largely from heating port 1b, for example, contact-type temperature sensors 9a, 9b can detect heat transferred thereto through top plate 3 due to heat conduction. Namely, induction heating cooker 300 according to the present exemplary embodiment has the advantage of being capable of detecting the temperature immediately and accurately with infrared sensor 10 and, further, has the advantage of being capable of detecting the temperature with contact-type temperature sensors 9a, 9b even when pan 2 as an example of the to-be-heated object does not exist thereabove. This enables detecting the temperatures of the to-be-heated object and top plate 3 more immediately and accurately, which can further improve the safety.

Further, although there have been described examples of the structures of the first temperature sensors and the second temperature sensor in the second exemplary embodiment and the present exemplary embodiment, the first sensors can be also constituted by infrared sensors, and the second sensor can be also constituted by a contact-type temperature sensor, and they are not limited to the structures described in the aforementioned exemplary embodiments.

### (Fourth Exemplary Embodiment)

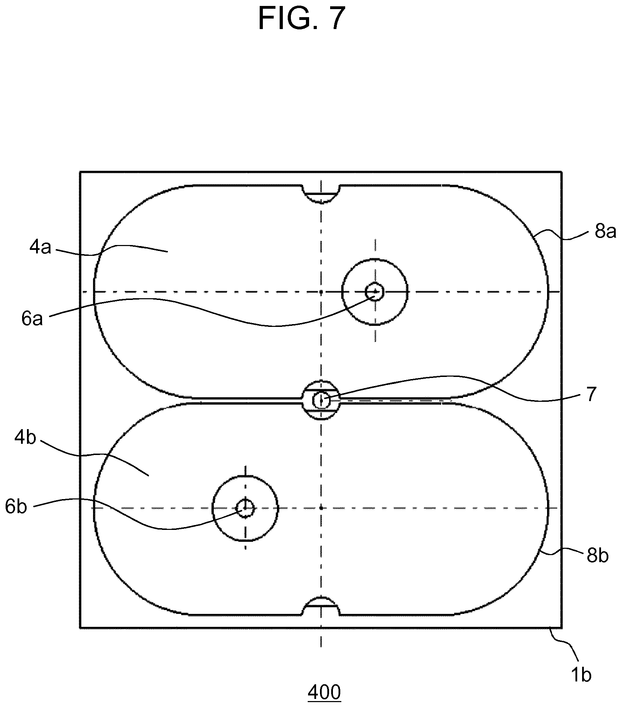

There will be described induction heating cooker 400 according to a fourth exemplary embodiment of the present invention, regarding an example of the positional relationship between heating coils and first temperature sensors, with reference to FIG. 7. Further, the same components as those of the aforementioned first to third exemplary embodiments of the present invention will be designated by the same reference characters and will not be described.

FIG. 7 is a plan view illustrating, from above, the heating coils in induction heating cooker 400 according to the fourth exemplary embodiment of the present invention.

Although FIGS. 1 to 6 illustrate examples where first temperature sensors 6a, 6b are placed at the centers of heating coils 4a, 4b, first temperature sensors 6a, 6b can be also placed in such a way as to be displaced from the centers of heating coils 4a, 4b, as illustrated in FIG. 7.

With such structure, even when pan 2 as an example of a to-be-heated object is placed in such a way as to be displaced from the center, in the leftward and rightward direction of heating port 1b, which is a heating area, first temperature sensor 6a or first temperature sensor 6b is placed near the to-be-heated object, which enables accurately detecting the temperature.

### (Fifth Exemplary Embodiment)

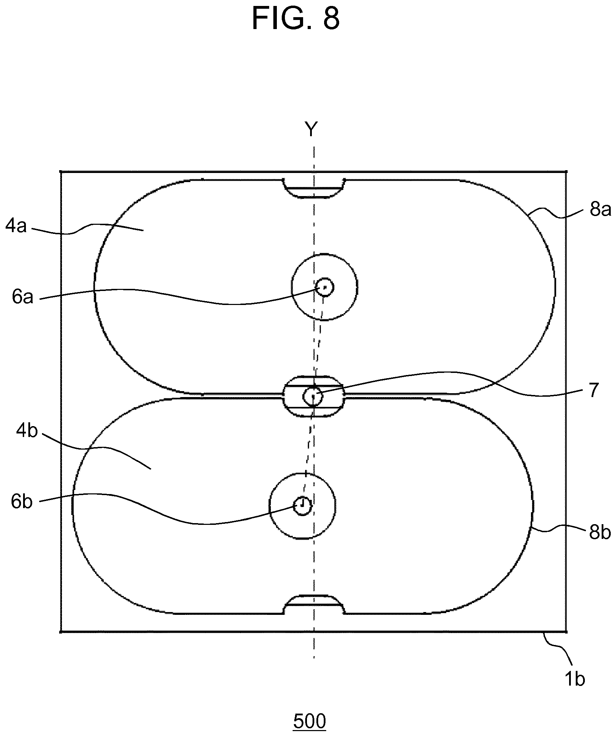

There will be described induction heating cooker 500 according to a fifth exemplary embodiment of the present invention, regarding an example of the positional relationship between a heating port and first temperature sensors, with reference to FIG. 8. Further, the same components as those of the aforementioned first to fourth exemplary embodiments of the present invention will be designated by the same reference characters and will not be described.

FIG. 8 is a plan view illustrating, from above, heating coils in induction heating cooker 500 according to the fifth exemplary embodiment of the present invention. In induction heating cooker 500 according to the present exemplary embodiment, it is not necessarily necessary that the centers of the heating coils exist on a center line of heating port 1b, which is a heating area, in the leftward and rightward direction or in the forward and rearward direction (the upward and downward direction in the paper plane of FIG. 8). For example, as illustrated in FIG. 8, induction heating cooker 500 is structured such that first temperature sensors 6a, 6b are placed in such a way as to be displaced from the center line Y of heating port 1b in the leftward and rightward direction.

In the present exemplary embodiment, the centers of heating coils 4a, 4b can either be on the center line of heating port 1b in the leftward and rightward direction or in the forward and rearward direction or be not on the center line.

With such structure, it is possible to provide the same effects as the effects described in the fourth exemplary embodiment.

As described above, according to the present invention, it is possible to provide an induction heating cooker having largely improved safety, since it is configured to perform control, using temperature sensors provided near the centers of heating coils at which a to-be-heated object placed thereon can be raised most largely in temperature when the to-be-heated object is heated with a single heating coil and, further, using a temperature sensor provided near the portion at which magnetic forces are concentrated and the to-be-heated object placed thereon is made to have a highest temperature when the to-be-heated object is heated with two or more heating coils.

### INDUSTRIAL APPLICABILITY

As described above, according to the present invention, it is possible to provide a heating cooker having improved safety and improved cooking performance, which is capable of accurately detecting the temperature at a portion where magnetic forces are concentrated to generate a higher temperature and, also, enables a user to select a position at which a to-be-heated object is placed to be heated. Accordingly, the present invention can be widely utilized for applications of heating cookers for use in homes, businesses, and the like.

### REFERENCE MARKS IN THE DRAWINGS

1: main body
1a: manipulation area
1b: heating port
2: pan (to-be-heated object)
3: top plate
4: heating coil portion
4a, 4b: heating coil
5: controller
6a, 6b: first temperature sensor
7: second temperature sensor
8a, 8b: mica sheet
9a, 9b, 9c: contact-type temperature sensor
10: infrared sensor

## Claims

1. An induction heating cooker (100) comprising:
a top plate (3) which is provided on an upper surface of a main body (1) and on which an object to be heated (2) is placed;
a heating port (1b) which is formed in the top plate (3) and is configured to indicate an area where the object to be heated (2) is placed;
a heating coil portion (4) which is provided under the top plate (3) in such a way as to correspond to the heating port (1b) and includes a plurality of heating coils (4a, 4b); and
a controller (5) which is configured to change over a number of heating coils (4a, 4b) to be operated among the heating coils (4a, 4b), according to a size of the object to be heated (2) and a position at which the object to be heated (2) is placed, and is configured to control a high-frequency electric current supplied to the heating coil portion (4) to be operated;
wherein
the heating coil portion (4) has at least two heating coils (4a, 4b) among the plurality of the heating coils (4a, 4b), the at least two heating coils (4a, 4b) being arranged to be placed side by side;
a single first temperature sensor (6a, 6b) is provided in each of the plurality of the heating coils (4a, 4b) and near a center of each of the plurality of the heating coils (4a, 4b);
a second temperature sensor (7) is provided between the at least two heating coils (4a, 4b) and near an area where the at least two heating coils (4a, 4b) come closest to each other;
the controller (5) is configured to detect, with the single first temperature sensor (6a, 6b) and the second temperature sensor (7), a temperature of the object to be heated (2) and control heating of the plurality of the heating coils (4a, 4b); and
the single first temperature sensor (6a, 6b) of at least one of the at least two heating coils (4a, 4b) being arranged to be placed side by side is provided in such a way as to be displaced from a center line of the heating port (1b) in a leftward and rightward direction or in a forward and rearward direction.

2. The induction heating cooker (100) according to claim 1, wherein
a contact-type temperature sensor (9a, 9b, 9c) configured to come in contact with the top plate (3) is used in the single first temperature sensor (6a, 6b) and the second temperature sensor (7).

3. The induction heating cooker (100) according to claim 1, wherein
a contact-type temperature sensor (9a, 9b, 9c) configured to come in contact with the top plate (3) is used in the single first temperature sensor (6a, 6b), and an infrared sensor (10) configured to detect an infrared ray radiated from the object to be heated (2) is used in the second temperature sensor (7).

4. The induction heating cooker (100) according to any one of claims 1 to 3, wherein
the single first temperature sensor (6a, 6b) is provided in such a way as to be displaced from a center of the heating coil (4a, 4b) with which the single first temperature sensor (6a, 6b) is provided, among the plurality of the heating coils (4a, 4b).

5. The induction heating cooker (100) according to any one of claims 1 to 4, wherein
the single first temperature sensor (6a, 6b) is provided in such a way as to be displaced from a center line of the heating port (1b) in a leftward and rightward direction or in a forward and rearward direction.

6. The induction heating cooker (100) according to any one of claims 1 to 5, wherein
a center of at least one of the plurality of the heating coils (4a, 4b) is displaced from the center line of the heating port (1b) in the leftward and rightward direction or in the forward and rearward direction.

## Patentansprüche

1. Kocher (100) mit Induktionserhitzung, mit:
einer Deckplatte (3), die auf einer oberen Oberfläche eines Hauptkörpers (1) vorgesehen ist und auf der ein zu erhitzendes Objekt (2) platziert wird;
einem Heizzugang (1b), der in der oberen Platte (3) ausgebildet und konfiguriert ist, um einen Bereich anzuzeigen, in dem das zu erhitzende Objekt (2) platziert wird;
einen Heizspulenabschnitt (4), der unter der Deckplatte (3) so vorgesehen ist, dass er dem Heizzugang (1b) entspricht und mehrere Heizspulen (4a, 4b) enthält; und
einer Steuerung (5), die konfiguriert ist, um über eine Anzahl von Heizspulen (4a, 4) aus den Heizspulen (4a, 4b) umzuschalten, die betrieben werden sollen, gemäß einer Größe des zu erhitzenden Objekts (2) und einer Position, an der das zu erhitzende Objekt (2) platziert wird, und die konfiguriert ist, um einen hochfrequenten elektrischen Strom zu steuern, der dem zu betreibenden Heizspulenabschnitt (4) zugeführt wird;
wobei
der Heizspulenabschnitt (4) mindestens zwei Heizspulen (4a, 4b) aus der Vielzahl der Heizspulen (4a, 4b) aufweist, wobei die mindestens zwei Heizspulen (4a, 4b) so angeordnet sind, dass sie nebeneinander platziert werden;
ein einzelner erster Temperatursensor (6a, 6b) in jeder der Vielzahl von Heizspulen (4a, 4b) und nahe einer Mitte jeder der Vielzahl der Heizspulen (4a, 4b) vorgesehen ist;
ein zweiter Temperatursensor (7) zwischen den mindestens zwei Heizspulen (4a, 4b) und in der Nähe eines Bereichs vorgesehen ist, in dem die mindestens zwei Heizspulen (4a, 4b) einander am nächsten kommen,
die Steuerung (5) konfiguriert ist, um mit dem einzelnen ersten Temperatursensor (6a, 6b) und dem zweiten Temperatursensor (7) eine Temperatur des zu erhitzenden Objekts (2) zu erfassen und die Erhitzung der mehreren Heizspulen (4a, 4b) zu steuern; und
der einzelne erste Temperatursensor (6a, 6b) von mindestens einer der mindestens zwei Heizspulen (4a, 4b), die so angeordnet sind, dass sie nebeneinander angeordnet sind, so vorgesehen ist, dass er von einer Mittellinie des Heizzugangs (1b) in einer Links- und Rechtsrichtung oder in einer Vorwärts und Rückwärtsrichtung versetzt ist.

2. Kocher (100) mit Induktionserhitzung nach Anspruch 1, bei dem
ein Kontakttemperatursensor (9a, 9b, 9c), der konfiguriert ist, um mit der Deckplatte (3) in Kontakt zu kommen, in dem einzelnen ersten Temperatursensor (6a, 6b) und dem zweiten Temperatursensor (7) verwendet wird.

3. Kocher (100) mit Induktionserhitzung nach Anspruch 1, bei dem
ein Kontakttemperatursensor (9a, 9b, 9c), der konfiguriert ist, um mit der Deckplatte (3) in Kontakt zu kommen, in dem einzelnen ersten Temperatursensor (6a, 6b) verwendet wird, und ein Infrarotsensor (10), der konfiguriert ist, um eine Infrarotstrahlung zu erfassen, die von dem zu erhitzenden Objekt (2) abgestrahlt wird, im zweiten Temperatursensor (7) verwendet wird.

4. Kocher (100) mit Induktionserhitzung nach einem der Ansprüche 1 bis 3, bei dem
der einzelne erste Temperatursensor (6a, 6b) so vorgesehen ist, dass er aus einer Mitte der Heizspule (4a, 4b) aus der Vielzahl der Heizspulen (4a, 4b) versetzt ist, mit der der einzelne erste Temperatursensor (6a, 6b) versehen ist.

5. Kocher (100) mit Induktionserhitzung nach einem der Ansprüche 1 bis 4, bei dem
der einzelne erste Temperatursensor (6a, 6b) so vorgesehen ist, dass er von einer Mittellinie des Heizzugangs (1b) in einer Links- und Rechtsrichtung oder in einer Vorwärts- und Rückwärtsrichtung versetzt ist.

6. Kocher (100) mit Induktionserhitzung nach einem der Ansprüche 1 bis 5, bei dem
eine Mitte von mindestens einer aus der Vielzahl der Heizspulen (4a, 4b) von der Mittellinie des Heizzugangs (1b) in der Links- und Rechtsrichtung oder in der Vorwärts- und Rückwärtsrichtung versetzt ist.

## Revendications

1. Appareil de cuisson à chauffage par induction (100) comprenant :
une plaque de dessus (3) qui est prévue sur une surface supérieure d'un corps principal (1) et sur laquelle est placé un objet à chauffer (2) ;
un foyer de chauffage (1b) qui est formé dans la plaque de dessus (3) et est configuré pour indiquer une zone où doit être placé l'objet à chauffer (2) ;
une portion de serpentin chauffant (4) qui est prévue sous la plaque de dessus (3) de façon à correspondre au foyer de chauffage (1b) et comporte une pluralité de serpentins chauffants (4a, 4b) ; et
un dispositif de commande (5) qui est configuré pour faire passer un nombre de serpentins chauffants (4a, 4b) à une mise en fonctionnement parmi les serpentins chauffants (4a, 4b), selon une taille de l'objet à chauffer (2) et une position à laquelle est placé l'objet à chauffer (2), et est configuré pour commander un courant électrique haute fréquence fourni à la portion de serpentin chauffant (4) à mettre en fonctionnement ;
dans lequel
la portion de serpentin chauffant (4) a au moins deux serpentins chauffants (4a, 4b) parmi la pluralité de serpentins chauffants (4a, 4b), les au moins deux serpentins chauffants (4a, 4b) étant agencés pour être placés côte à côte ;
un premier capteur de température unique (6a, 6b) est prévu dans chacun de la pluralité de serpentins chauffants (4a, 4b) et près d'un centre de chacun de la pluralité de serpentins chauffants (4a, 4b) ;
un deuxième capteur de température (7) est prévu entre les au moins deux serpentins chauffants (4a, 4b) et près d'une zone où les au moins deux serpentins chauffants (4a, 4b) s'approchent le plus l'un de l'autre ;
le dispositif de commande (5) est configuré pour détecter, avec le premier capteur de température unique (6a, 6b) et le deuxième capteur de température (7), une température de l'objet à chauffer (2) et commander le chauffage de la pluralité de serpentins chauffants (4a, 4b) ; et
le premier capteur de température unique (6a, 6b) d'au moins l'un des deux serpentins chauffants (4a, 4b) étant agencé pour être placé côte à côte est prévu de façon à être déplacé à partir d'une ligne centrale du foyer de chauffage (1b) dans une direction vers la gauche et vers la droite ou dans une direction vers l'avant et vers l'arrière.

2. Appareil de cuisson à chauffage par induction (100) selon la revendication 1, dans lequel
un capteur de température de type à contact (9a, 9b, 9c) configuré pour entrer en contact avec la plaque de dessus (3) est utilisé dans le premier capteur de température unique (6a, 6b) et le deuxième capteur de température (7).

3. Appareil de cuisson à chauffage par induction (100) selon la revendication 1, dans lequel
un capteur de température de type à contact (9a, 9b, 9c) configuré pour entrer en contact avec la plaque de dessus (3) est utilisé dans le premier capteur de température unique (6a, 6b), et un capteur infrarouge (10) configuré pour détecter un rayon infrarouge provenant de l'objet à chauffer (2) est utilisé dans le deuxième capteur de température (7).

4. Appareil de cuisson à chauffage par induction (100) selon l'une quelconque des revendications 1 à 3, dans lequel
le premier capteur de température unique (6a, 6b) est prévu de façon à être déplacé à partir d'un centre du serpentin chauffant (4a, 4b) avec lequel le premier capteur de température unique (6a, 6b) est prévu, parmi la pluralité de serpentins chauffants (4a, 4b).

5. Appareil de cuisson à chauffage par induction (100) selon l'une quelconque des revendications 1 à 4, dans lequel
le premier capteur de température unique (6a, 6b) est prévu de façon à être déplacé à partir d'une ligne centrale du foyer de chauffage (1b) dans une direction vers la gauche et vers la droite ou dans une direction vers l'avant et vers l'arrière.

6. Appareil de cuisson à chauffage par induction (100) selon l'une quelconque des revendications 1 à 5, dans lequel
un centre d'au moins l'un de la pluralité de serpentins chauffants (4a, 4b) est déplacé depuis une ligne centrale du foyer de chauffage (1b) dans la direction vers la gauche et vers la droite ou dans la direction vers l'avant et vers l'arrière.
